(19) Europäisches Patentamt
European Patent Office
Office européen des brevets

(11) **EP 1 874 581 B1**

(12) **EUROPÄISCHE PATENTSCHRIFT**

(45) Veröffentlichungstag und Bekanntmachung des Hinweises auf die Patenterteilung:
**13.08.2008 Patentblatt 2008/33**

(21) Anmeldenummer: **06725113.2**

(22) Anmeldetag: **16.03.2006**

(51) Int Cl.:
**B60K 31/00** (2006.01)

(86) Internationale Anmeldenummer:
**PCT/EP2006/060810**

(87) Internationale Veröffentlichungsnummer:
**WO 2006/108751 (19.10.2006 Gazette 2006/42)**

(54) **FAHRERASSISTENZSYSTEM MIT EINRICHTUNG ZUR ERKENNUNG VON STEHENDEN OBJEKTEN**

DRIVER ASSISTANCE SYSTEM COMPRISING A DEVICE FOR RECOGNIZING NON-MOVING OBJECTS

SYSTEME D'ASSISTANCE A LA CONDUITE POURVU D'UN DISPOSITIF PERMETTANT LA RECONNAISSANCE D'OBJETS IMMOBILES

(84) Benannte Vertragsstaaten:
**DE FR GB**

(30) Priorität: **15.04.2005 DE 102005017422**

(43) Veröffentlichungstag der Anmeldung:
**09.01.2008 Patentblatt 2008/02**

(73) Patentinhaber: **ROBERT BOSCH GMBH
70442 Stuttgart (DE)**

(72) Erfinder:
• **WEILKES, Michael
74343 Sachsenheim (DE)**
• **BOECKER, Juergen
70176 Stuttgart (DE)**
• **PETSCHNIGG, Peter
70469 Stuttgart (DE)**

(56) Entgegenhaltungen:
**US-A- 5 929 803          US-A1- 2003 236 605**

**Beschreibung**

Stand der Technik

Die Erfindung betrifft ein Fahrerassistenzsystem für Kraftfahrzeuge, mit einem Ortungssystem zur Ortung von Objekten im Umfeld des Fahrzeugs und einer Einrichtung zum Vergleich der Differenz zwischen der Relativbewegung des Objekts und der Eigenbewegung des Fahrzeugs mit einem Schwellenwert. Dokument US 5929803 beschreibt gemäss dem Oberbegriff des Anspruchs 1 ein solches System.

Fahrerassistenzsysteme dienen dazu, den Fahrer bei der Führung eines Kraftfahrzeugs zu unterstützen, ihn vor drohenden Gefahren zu warnen und/oder automatisch Maßnahmen zur Milderung der Folgen einer bevorstehenden Kollision einzuleiten. Dazu greifen die Fahrerassistenzsysteme auf Daten eines Ortungssystems zurück, mit dem Objekte im Umfeld des Fahrzeugs, insbesondere andere Verkehrsteilnehmer, detektiert werden können. Beispiele für solche Fahrerassistenzsysteme sind etwa Systeme zur Spurverlassungswarnung, die den Fahrer darauf hinweisen, wenn er ohne zu blinken im Begriff ist, die derzeit befahrene Fahrspur zu verlassen, oder ACC-Systeme (Adaptive Cruise Control), die die Geschwindigkeit des eigenen Fahrzeugs automatisch so regeln, daß ein detektiertes vorausfahrendes Fahrzeug in einem angemessenen Abstand verfolgt wird.

Als Ortungssystem werden bisher zumeist Radarsysteme eingesetzt (z. B. (77 GHz) longrange Radarsysteme). Denkbar ist jedoch auch der Einsatz von Ultraschallsensoren, Mono- oder Stereo-Videosystemen, (24 GHz) short-range Radarsystemen oder Lidarsystemen.

Die heute bereits in der Praxis eingesetzten ACC-Systeme sind generell für den Einsatz auf Autobahnen oder gut ausgebauten Landstraßen gedacht und reagieren deshalb grundsätzlich nur auf sich bewegende Objekte, z. B. auf vorausfahrende Fahrzeuge, während stehende Objekte ignoriert werden, ausgehend von der Annahme, daß sich solche Objekte auf Autobahnen im Normalfall nicht auf der Fahrbahn befinden, und weil es technisch sehr schwierig ist, anhand von Radar-Daten eine Relevanzklassifikation von stehenden Objekten durchzuführen. Da jedoch auch stehende Objekte ein Radarecho hervorrufen, muß das System in der Lage sein, zwischen stehenden Objekten und fahrenden Objekten zu unterscheiden.

Es sind auch ACC-Systeme in Entwicklung, die einen erweiterten Anwendungsbereich haben und beispielsweise auch auf Landstraßen oder sogar im Stadtverkehr oder als auch Stauassistent in Stausituationen eingesetzt werden können. Diese fortgeschrittenen Systeme stellen erhöhte Anforderungen an die Interpretation des Verkehrsumfelds, so daß die Unterscheidung zwischen (relevanten) stehenden und fahrenden Objekten sowie auch zwischen prinzipiell bewegbaren und nicht bewegbaren Objekten eine erhebliche Rolle spielt, beispielsweise bei der Erkennung von Radfahrern oder Fußgängern und bei der Vorhersage deren Verhaltens. Die Zustände "stehend" und "fahrend" beziehen sich auf den momentanen Zustand des Objektes. Die Klassifikation als "nicht bewegbar" bedeutet, daß sich ein Objekt seit seinem Eintritt in den Erfassungsbereich des Ortungssystems nie bewegt hat, und als "bewegbar" gilt ein Objekt, wenn es sich in der Vergangenheit bewegt hat. So kann beispielsweise ein angehaltenes Fahrzeug dadurch erkannt werden, daß es als stehend und bewegbar klassifiziert wird. Die Klassifizierung bezieht sich im einfachsten Fall nur auf die Bewegung in einer Richtung, nämlich in Fahrtrichtung, kann sich jedoch in komplexeren Systemen auch auf Querbewegungen beziehen.

Mit einem Radarsystem ist es möglich, die Relativgeschwindigkeit eines Objekts in Richtung des Sehstrahls, also annähernd in Fahrtrichtung, direkt zu messen. Die Absolutgeschwindigkeit des Objekts, also die "Geschwindigkeit über Grund" erhält man dann, indem man von der gemessenen Relativgeschwindigkeit die bekannte Eigengeschwindigkeit des eigenen Fahrzeugs subtrahiert (genau genommen wird die scheinbare Relativbewegung subtrahiert, die aus der Bewegung des eigenen Fahrzeugs reluitiert). Wenn diese Differenz null ist, handelt es sich um ein stehendes Objekt. In der Praxis wird man jedoch auch bei stehenden Objekten aufgrund unvermeidlicher Messungenauigkeiten nie genau die Differenz null erhalten. Die Differenz wird deshalb mit einem geeignet gewählten Schwellenwert verglichen, und das Objekt wird als stehend klassifiziert, wenn die Geschwindigkeitsdifferenz dem Betrage nach unter dem Schwellenwert liegt.

Bei gesteigerten Anforderungen an die Genauigkeit der Objektklassifizierung erweist sich die Wahl eines geeigneten Schwellenwertes jedoch als schwierig. Ist der Schwellenwert zu klein, so können Ungenauigkeiten in den Geschwindigkeitsmessungen, die mit Hilfe des Ortungssystems und, für das eigene Fahrzeug, mit Hilfe eines Drehzahlmessers und bei Querbewegungen mit Hilfe eines Gierratensensors vorgenommen werden, zu Fehlklassifikationen führen. Besonders problematisch ist dies, wenn auch eine Klassifizierug nach bewegbaren und nicht bewegbaren Objekten erforderlich ist, denn wenn ein Objekt einmal fälschlich als fahrend klassifiziert wurde, wird es von diesem Zeitpunkt an immer als bewegbar gelten. Wenn andererseits der Schwellenwert zu groß gewählt ist, werden Objekte, die sich mit geringer Geschwindigkeit bewegen, wie z. B. Fußgänger, als stehend klassifiziert.

Fehlklassifizierungen treten besonders häufig in Situationen auf, in denen eine hohe Dynamik vorliegt, z. B. bei starken Bremsungen oder bei Fahrten in engen Kurven. Durch Filterlaufzeiten und andere Filtereffekte wie Signalverzögerungen, Unter- bzw. Überschwingen und der dergleichen wird dann insbesondere die Messung der Eigengeschwindigkeit verfälscht. Eine weitere Fehlerquelle sind Ungenauigkeiten in den Messungen mit Hilfe des Ortungssystems. Zusätzliche Fehlerquellen ergeben sich daraus, daß für die Aufbereitung der Daten aus verschiedenen Sensorsystemen zumeist unterschiedliche Filter oder Filteralgorithmen verwendet werden, so daß z. B. durch unterschiedliche Signalverzögerungen Differenzen vorgetäuscht werden, die in Wahrheit nicht bestehen. Dieses Problem verschärft sich, wenn zur genaueren Erfassung des Verkehrsumfelds eine Vielzahl von Sensorsystemen eingesetzt wird, deren Messergebnisse dann miteinander fusioniert werden.

Im Stadtverkehr oder generell bei Fahrten mit niedriger Geschwindigkeit, also in Situationen, in denen die weiterentwickelten Fahrerassistenzsysteme eingesetzt werden sollen, erweisen sich diese Mängel als besonders störend. Zum einen herrscht gerade im Stadtverkehr eine besonders hohe Dynamik, die die Wahrscheinlichkeit von Fehlklassifizierungen erhöht, zum anderen ist im Stadtverkehr eine verläßliche Unterscheidung zwischen stehenden aber bewegbaren Objekten, wie z. B. haltenden Fahrzeugen, und nicht bewegbaren Objekten, wie z. B. Kanaldeckeln auf der Fahrbahn, besonders wichtig, weil im Stadtverkehr auch auf stehende Fahrzeuge reagiert werden muß. Erschwerend kommt hinzu, daß gerade bei sehr niedrigen Geschwindigkeiten die Messung der Eigengeschwindigkeit sehr ungenau wird. Die Eigengeschwindigkeit wird üblicherweise anhand der Raddrehzahlen berechnet, die mit Impulsgebern gemessen werden. Bei niedriger Drehzahl ist die Impulsfrequenz dieser Impulsgeber so niedrig, daß keine genaue Geschwindigkeitsmessung mehr möglich ist.

Fahrerassistenzsysteme sollen nicht nur objektiv die Fahrsicherheit erhöhen, sondern sie sollen dem Fahrer auch subjektiv ein erhöhtes Sicherheitsgefühl vermitteln und den Komfort bei der Führung des Fahrzeugs verbessern. Vor diesem Hintergrund ist anzustreben, daß das Verhalten des Fahrerassistenzsystems für den Fahrer jederzeit plausibel und nachvollziehbar ist. Der an sich zu begrüßende Umstand, daß das Ortungssystem die Absolut- und Relativbewegungen von Objekten wesentlich genauer erfassen kann als der Fahrer selbst diese Bewegungen einschätzen kann, erweist sich vor diesem Hintergrund unter bestimmten Umständen als Nachteil, insbesondere in Situationen, in denen noch keine akute Gefahr droht. Wenn sich nämlich das Fahrerassistenzsystem aufgrund der hohen Empfindlichkeit der Sensorik anders verhält als es der Fahrer aufgrund seiner eingeschränkten Wahrnehmungsmöglichkeiten intuitiv erwarten würde, so ist das Systemverhalten aus der Sicht des Fahrers unplausibel, und dies wird häufig als störend empfunden une beeinträchtigt die Akzeptanz des Fahrerassistenzsystems.

Vorteile der Erfindung

Die Erfindung mit den in Anspruch 1 angegebenen Merkmalen bietet den Vorteil, daß sie im Hinblick auf die Unterscheidung zwischen stehenden und bewegten Objekten ein situationsgerechteres und/oder für den Fahrer nachvollziehbareres Systemverhalten ermöglicht.

Dies wird erfindungsgemäß dadurch erreicht, daß der Schwellenwert, mit dem die Differenz zwischen Relativbewegung und Eigenbewegung verglichen wird, situationsabhängig variiert wird, und zwar als Funktion einer oder mehrerer Größen, die die Genauigkeit der Bestimmung der Relativ- und Eigenbewegungen beeinflussen.

So ist es möglich, in Situationen, in denen die vom Ortungssystem gelieferten Daten über die Eigenbewegung und die Relativbewegung eine hohe Verläßlichkeit haben, den Schwellenwert zu senken, so daß schärfer zwischen stehenden und bewegten Objekten unterschieden werden kann, während andererseits bei zunehmender Unsicherheit der Daten der Schwellenwert erhöht wird, damit Fehlklassifizierungen vermieden werden. Ebenso kann durch Variation des Schwellenwertes dem eingeschränkten Wahrnehmungsvermögen des Fahrers besser Rechnung getragen werden.

Vorteilhafte Ausgestaltungen und Weiterbildungen der Erfindung ergeben sich aus den Unteransprüchen.

Bei den Größen, die die Genauigkeit der Bestimmung der Relativbewegung und der Eigenbewegung mit Hilfe des Ortungssystems beeinflussen und deshalb in die Berechnung des Schwellenwertes einfließen, handelt es sich bevorzugt um eine oder mehrere der folgenden Größen: die Standardabweichung der gemessenen Relativgeschwindigkeit des Objekts, die Beschleunigung des eigenen Fahrzeugs, die Eigengeschwindigkeit des Fahrzeugs und Größen, die die Gierbewegung des eigenen Fahrzeugs spezifizieren.

Gemäß einer Ausführungsform erfolgt eine Klassifizierung der georteten Objekte nach stehenden und bewegten Objekten nicht nur in Fahrtrichtung, sondern auch für die Bewegungskomponente in Querrichtung. Dazu wird bevorzugt für jede der beiden Bewegungskomponenten ein gesonderter Schwellenwert gebildet. In die Berechnung des Schwellenwertes für die Querkomponente fließen dann bevorzugt auch die Standardabweichung für die Messung der Relativgeschwindigkeit des Objekts in Querrichtung sowie der gemessene Objektabstand ein.

Für eine hinreichend genaue, situationsgerechte Anpassung des Schwellenwertes oder der Schwellenwerte genügt es im allgemeinen, wenn der Schwellenwert als Linearkombination der verschiedenen Einflussgrößen berechnet wird, vorzugsweise zuzüglich einer additiven Konstanten, die den verbleibenden Restunsicherheiten Rechnung trägt, wenn alle Einflussgrößen den Wert null haben.

Gemäß einer vorteilhaften Weiterbildung erfolgt nicht nur eine Klassifikation nach stehenden und bewegten Objekten, sondern auch nach bewegbaren und nicht bewegbaren Objekten. Dabei wird ein Objekt nur dann als bewegbar klassifiziert, wenn es in einer bestimmten Anzahl aufeinanderfolgender Messzyklen als bewegt klassifiziert wurde. Die hierzu erforderliche Anzahl von Messzyklen steht insbesondere in Zusammenhang mit der Dimensionierung der Schwellenwerte in Abhängigkeit von den Standardabweichungen für die Relativgeschwindigkeiten.

Wahlweise oder zusätzlich kann bei der Bestimmung des Schwellenwertes auch berücksichtigt werden, wie genau der Fahrer selbst die Bewegung des betreffenden Objekts einschätzen kann. Maßgebliche Einflussgrößen sind in diesem Fall z. B. der Objektabstand und die Geschwindigkeit des eigenen Fahrzeugs, weil der Fahrer die Bewegung eines Ojekts um so schwerer einschätzen kann, je weiter es entfernt ist und je größer die eigene Geschwindigkeit ist.

Zeichnung

Ausführungsbeispiele der Erfindung sind in den Zeichnungen dargestellt und in der nachfolgenden Beschreibung näher erläutert.

Es zeigen:

Figur 1 eine Skizze eines mit einem Fahrerassistenzsystem ausgerüsteten Kraftfahrzeugs und eines georteten Objekts;

Figur 2 ein Blockdiagramm derjenigen Teile des Fahrerassistenzsystems, die sich auf die Klassifikation der Objekte als bewegt, stehend, bewegbar oder nicht bewegbar beziehen.

Figur 3 ein Blockdiagramm für ein Fahrerassistenzsystem gemäß einem anderen Ausführungsbeispiel; und

Figuren 4 bis 6 Diagramme zur Erläuterung der Arbeitsweise des Fahrerassistenzsystems nach Figur 3.

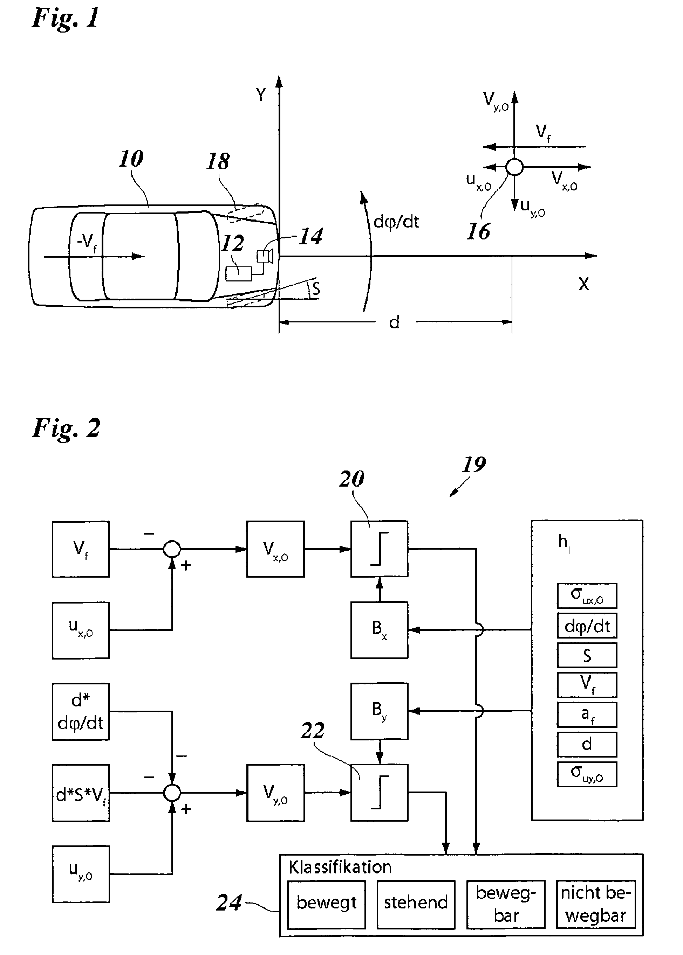

In Figur 1 ist ein Fahrzeug 10 dargestellt, das mit einem Fahrerassistenzsystem 12, beispielsweise einem ACC-System ausgerüstet ist. Als Ortungssystem ist ein Radarsensor 14 eingebaut. Im Ortungsbereich des Radarsensors befindet sich im gezeigten Beispiel ein einzelnes Objekt 16, dessen Abstand d in der Richtung X (Fahrtrichtung des Fahrzeugs 10) und dessen Relativgeschwindigkeit ux,O in X-Richtung direkt gemessen werden können. Der Radarsensor 12 hat ein gewisses Winkelauflösungsvermögen und kann daher auch den Azimutwinkel messen, unter dem das Objekt 16 in bezug auf die X-Achse gesehen wird. Daraus läßt sich mit Hilfe des gemessenen Abstands d die Querposition des Objekts in Richtung der Y-Achse sowie durch zeitliche Ableitung die Relativgeschwindigkeit uy,O in Y-Richtung berechnen.

Über dem Objekt 16 ist in Figur 1 ein Vektor Vf eingezeichnet, der die "Eigengeschwindigkeit" des Fahrzeugs 10 angibt. Genauer gibt dieser Vektor die scheinbare Relativgeschwindigkeit an, die sich für ein ruhendes Objekt aus der Eigenbewegung des Fahrzeugs 10 in Fahrtrichtung (positive X-Richtung) ergäbe. Die "wirkliche Eigengeschwindigkeit" des Fahrzeugs 10 ist im Grundriß dieses Fahrzeugs noch einmal als Vektor dargestellt und mit -Vf bezeichnet. Die Eigengeschwindigkeit Vf wird mit Hilfe von üblichen, nicht gezeigten Sensoren an Bord des Fahrzeugs 10 direkt gemessen. Subtrahiert man die Eigengeschwindigkeit Vf von der Relativgeschwindigkeit ux,O des Objekts 16, so erhält man die Absolutgeschwindigkeit Vx,O des Objekts 16.

Die Eigengeschwindigkeit des Fahrzeugs 10 hat nach Definition keine Komponente in Y-Richtung, da die X-Achse des Koordinatensystems hier durch die Längsachse des Fahrzeugs definiert ist. Wenn die Absolutgeschwindigkeit Vy,O des Objekts 16 in Y-Richtung berechnet werden soll, muß jedoch eine mögliche Gierbewegung des Fahrzeugs 10 um seine Hochachse berücksichtigt werden, da diese zu einer scheinbaren Änderung des Azimutwinkels des Objekts 16 und damit zu einer scheinbaren Relativgeschwindigkeit in Y-Richtung führt. In Figur 1 ist die Giergeschwindigkeit d /dt des Fahrzeugs 10 durch einen gebogenen Pfeil symbolisiert. Diese Giergeschwindigkeit kann direkt mit Hilfe eines nicht gezeigten Gierratensensors gemessen werden. Alternativ oder zusätzlich ist es auch möglich, die Giergeschwindigkeit aus dem gemessenen Lenkeinschlag S der Vorderräder 18 des Fahrzeugs und dem Betrag der Eigengeschwindigkeit Vf zu berechnen. Die Absolutgeschwindigkeit Vy,O des Objekts 16 in Y-Richtung erhält man dann nach der Formel:

$$Vy,O = uy,O - d * d\ /dt.$$

In Figur 2 ist eine Einrichtung 19 zur Berechnung der Absolutgeschwindigkeiten Vx,O und Vy,O des Objekts 16 aus den Messdaten und zur Erkennung stehender Objekte als Blockdiagramm dargestellt. Für die Berechnung der Querkomponente Vy,O wird hier angenommen, daß die beiden oben beschriebenen Messverfahren für die Giergeschwindigkeit parallel angewandt werden und aus den Ergebnissen eine gewichtete Summe gebildet wird.

Um zu entscheiden, ob das Objekt 16 als stehendes oder als bewegliches Objekt zu klassifizieren ist, werden die Absolutgeschwindigkeiten Vx,O und Vy,O jeweils einem zugehörigen Schwellenwertvergleicher 20 bzw. 22 zugeführt und mit einem geeigneten Schwellenwert Bx bzw. By verglichen. Die Vergleichsergebnisse werden einer Klassifikationseinheit 24 zugeführt, und wenn beide Absolutgeschwindigkeiten unter ihrem jeweiligen Schwellenwert liegen, wird das Objekt als stehend klassifiziert, andernfalls als bewegt.

Die Schwellenwerte Bx und By sind bei dem hier beschriebenen Fahrerassistenzsystem nicht statisch, sondern werden dynamisch in Abhängigkeit von einer Anzahl von Größen variiert, die hier zusammenfassend mit hi bezeichnet sind. Im einzelnen handelt es sich bei diesen Größen um die Standardabweichungen ux,O und uy,O für die Messung der Relativgeschwindigkeiten des Objekts 16 in X- und Y-Richtung, die (durch direkte Messung erhaltene) Giergeschwindigkeit d /dt des Fahrzeugs 10, den Lenkeinschlag S, die Eigengeschwindigkeit Vf des Fahrzeugs 10, die Beschleunigung af des Fahrzeugs 10 und den gemessenen Abstand d des Objekts 16.

Die Standardabweichungen ux,O und uy,O ergeben sich aus den Eigenschaften der verwendeten Sensoren und des Messverfahrens und lassen sich experimentell oder anhand geeigneter Sensormodelle berechnen. Denkbar ist auch eine Bestimmung der Standardabweichungen durch statistische Auswertung der in aufeinanderfolgenden Messzyklen aufgenommenen Daten. Diese Standardabweichungen liefern ein Maß für die Verläßlichkeit der gemessenen Relativgeschwindigkeiten. Hohe Standardabweichungen führen daher zu einer Erhöhung der Schwellenwerte Bx und By.

Auch die übrigen unter der Sammelbezeichnung hi zusammengefaßten Größen haben in spezifischer Weise Einfluss auf die Genauigkeit, mit der die Absolutgeschwindigkeiten des Objekts 16 berechnet werden können. Da der Abstand d und in der Regel auch die Standardabweichungen für verschiedene Objekte unterschiedlich sein können, versteht es sich, daß im Fall von mehreren georteten Objekten die Schwellenwerte Bx und By für jedes Objekt gesondert berechnet werden, jeweils unter Verwendung der für dieses Objekt geltenden Größen hi.

Die Berechnung der Schwellenwerte By und By erfolgt z. B. nach der folgenden Funktionsvorschrift:

$$Bx = Bmin,x + f\,,x* \; ux,O + fa,x*|af| + fv,x*|Vf| + fg,x*g$$

$$By = Bmin,y + f\,,y* \; uy,O + fd,y * d + fv,y*|Vf| + fg,y*g$$

Darin sind Bmin,x und Bmin,y fest vorgegebene Mindestschwellenwerte, die nicht unterschritten werden. Damit wird unvermeidlichen Restfehlern Rechnung getragen, die sich z. B. aus Ungenauigkeiten bei der Messung der Eigengeschwindigkeit Vf ergeben können, aber auch Filterlaufzeiten, die zu Verzögerungen bei der Anpassung der Größen hi führen, beispielsweise bei starken Beschleunigungen. Die Koeffizienten f... mit den verschiedenen Indizes sind konstante Koeffizienten, die bestimmen, wie stark die jeweils zugehörige Größe hi den Schwellenwert beeinflusst. Der Faktor g repräsentiert die Giergeschwindigkeit, die zum einen direkt gemessen und zum anderen aus dem Lenkeinschlag S berechnet wird und ist definiert durch die Formel:

$$g = MAX(d\,/dt, fS * S * Vf)$$

mit einem geeignet gewählten Koeffizienten fS, so daß das Produkt fS * S * Vf etwa proportional zur Giergeschwindigkeit ist. Auf diese alternative Methode zur Berechnung der Giergeschwindigkeit könnte auch verzichtet werden, doch hat sie den Vorteil, daß sich eine Änderung des Lenkeinschlags S oft schneller messen läßt als die Änderung der mit Hilfe eines Gierratensensors bestimmten Giergeschwindigkeit.

Neben Kurvenfahrten stellen auch starke Beschleunigungen und Verzögerungen eine erhebliche Fehlerquelle dar. Dementsprechend hat der Koeffizient fa,x einen relativ hohen Wert. Der Einfluss der Eigengeschwindigkeit Vf auf die Genauigkeit der Bestimmung der Absolutgeschwindigkeiten des Objekts ist dagegen relativ gering, so daß die Koeffizienten fv,x und fv,y hier nur relativ geringe Werte haben.

Die Koeffizienten f ,x und f ,y sollten etwa gleich 1,0 sein. Wenn man annimmt, daß die Verteilung der Messergebnisse für die Absolutgeschwindigkeiten ux,O und ux,O etwa einer Gaußverteilung entspricht, liegen etwa 67 % aller Messungen innerhalb einer Standardabweichung, so daß, wenn der Schwellenwert entsprechend Standardabweichung angehoben und gesenkt wird, in etwa 33 % der Fälle eine Fehlklassifizierung verursacht wird. Bei der Klassifikation der Objekte als "bewegt" oder "stehend" ist dies akzeptabel, weil diese Klassifikation nur temporär gilt und im nächsten Messzyklus wieder korrigiert werden kann. In der Klassifikationseinheit 24 werden die Objekte jedoch auch nach den Kategorien "bewegbar" und "nicht bewegbar" klassifiziert. Dabei ist die Kassifikation als "bewegbar" gleichsam unwiderruflich, weil ein Objekt als bewegbar gilt, sobald es einmal als bewegtes Objekt klassifiziert wurde. Um die Häufigkeit von Fehlklassifizierungen weiter zu reduzieren ist deshalb die Klassifikationseinheit 24 so ausgebildet, daß ein Objekt nur dann als bewegbar klassifiziert wird, wenn es in einer vorbestimmten Anzahl(z. B. fünf) aufeinanderfolgender Messzyklen stets als "bewegt" klassifiziert wurde. Bei einer Fehlerhäufigkeit von 33 % je Messzyklus reduziert sich dann die Gesamt-Fehlerhäufigkeit auf einen akzeptablen Wert von nur etwa 0,4 %. So läßt sich durch dynamische Adaption der Schwellenwerte Bx und By eine sehr zuverlässige Klassifizierung der Objekte erreichen.

Im gezeigten Beispiel sind Bx und By lineare Funktionen der Größen hi. In einer modifizierten Ausführungsform ist jedoch auch die Verwendung nichtliearer Funktionen denkbar, die die Abhängigkeit der optimalen Schwellenwerte von den Einflussgrößen noch besser abbilden.

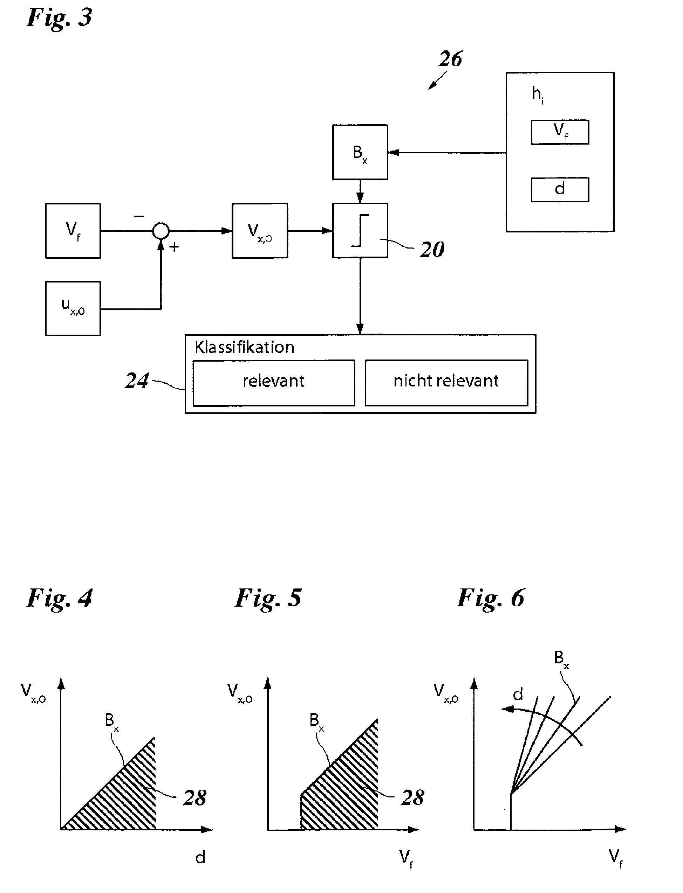

Figur 3 zeigt ein Blockdiagramm einer Einrichtung 26, die in ihrer Funktion der Einrichtung 19 in Figur 2 entspricht, jedoch nur einen eingeschränkten Funktionsumfang hat. Im Vordergrund steht hier die Berücksichtigung der Wahmehmungs- und Einschätzungsmöglichkeiten des menschlichen Fahrers, um das Systemverhalten besser an die intuitiven Erwartungen des Fahrers anzupassen.

Bei den Größen hi handelt es sich in diesem einfachen Beispiel lediglich um die Eigengeschwindigkeit Vf des Fahrzeugs 10 und den Abstand d des betreffenden Objekts. Diese Größen dienen zur Bestimmung des Schwellenwertes Bx für den Schwellenwertvergleicher 20. Durch die Klassifikationseinheit 24 werden die Objekte hier nur nach zwei Kategorien klassifiziert, nämlich als entweder "relevant" oder als "nicht relevant". Wenn die Absolutgeschwindigkeit Vx, O des Objekts unterhalb des Schwellenwertes Bx liegt, wird das Objekt als nicht relevant klassifiziert, so daß dieses Objekt im Rahmen der ACC-Funktion keine Systemreaktion auslöst.

In Figur 4 ist die Abhängigkeit des Schwellenwertes Bx vom Objektabstand d in Diagrammform dargestellt. Der schraffiert eingezeichnete Bereich 28 entspricht den Wertepaaren (d, Vx,O), für die das Objekt als nicht relevant eingestuft wird. Man erkennt, daß der Schwellenwert Bx mit zunehmendem Objektabstand d linear erhöht wird.

Als Beispiel kann etwa an die Situation gedacht werden, daß es sich bei dem Objekt um ein teilweise in die eigene Fahrspur hereinragendes Fahrzeug am Fahrbahnrand handelt, das gerade im Begriff ist anzuhalten und noch etwas ausrollt oder umgekehrt, gerade im Begriff ist anzufahren und schon etwas anrollt. Bei großem Objektabstand d ist diese Rollbewegung für den Fahrer noch nicht wahrnehmbar, und wenn das ACC-System bereits auf dieses Fahrzeug reagieren würde, so wäre die Reaktion für den Fahrer nicht plausibel. Der variable Schwellenwert Bx sorgt dafür, daß dieses unplausible Verhalten vermieden wird. Wenn im weiteren Verlauf, etwa bei einem gerade anfahrenden Objekt, der Abstand d abnimmt und gleichzeitig die Absolutgeschwindigkeit Vx,O des Objekts zunimmt, so wird auch der Fahrer erkennen, daß das vermeintlich haltende Fahrzeug im Begriff ist, sich in den fließenden Verkehr einzufädeln. Das Objekt bewegt sich dabei in dem d-Vx,O-Diagramm gemäß Figur 4 nach links oben und wird alsbald den Schwellenwert Bx überschreiten, so daß dann die entsprechende Systemreaktion ausgelöst wird, die nun aber für den Fahrer plausibel und nachvollziehbar ist.

In Figur 5 ist die Abhängigkeit des Schwellenwertes Bx von der Eigengeschwindigkeit Vf des Fahrzeugs 10 dargestellt. Bei sehr niedriger Eigengeschwindigkeit Vf ist der Schwellenwert Bx praktisch gleich 0, d.h., das System reagiert auf jede geringste Bewegung des georteten Objekts. Dies beruht auf der Überlegung, daß auch der Fahrer des eigenen Fahrzeugs Bewegungen anderer Fahrzeuge sehr leicht erkennen kann, wenn das eigene Fahrzeug nahezu steht. In der oben betrachteten Beispielsituation würde das ACC-System das gerade anfahrende Fahrzeug als relevant einstufen und mit einer Verzögerung des eigenen Fahrzeugs reagieren. Dies entspricht auch dem natürlichen Verhalten eines "freundlichen" Autofahrers, der in dieser Situation ebenfalls verzögern würde, um dem anfahrenden Fahrzeug das Einfädeln zu ermöglichen.

Ab einem bestimmten Mindestwert für die Eigengeschwindigkeit Vf steigt der Schwellenwert im gezeigten Beispiel sprunghaft auf einen Sockelwert und nimmt dann mit weiter steigender Eigengeschwindigkeit linear zu. Damit wird dem Umstand Rechnung getragen, daß der Fahrer des eigenen Fahrzeugs die Bewegung des Objekts um so schwerer erkennen kann, je größer seine eigene Geschwindigkeit Vf ist.

In Figur 6 ist in Diagrammform ein dreidimensionales Kennfeld dargestellt, das die Abhängigkeit des Schwellenwertes Bx von der Eigengeschwindigkeit Vf und vom Objektabstand d angibt. Mit zunehmendem Objektabstand d wird die Kurve, die den Schwellenwert Bx in Abhängigkeit von Vf angibt, steiler, d.h., bei festem Vf nimmt der Schwellenwert ähnlich wie in Figur 4 mit zunehmendem Objektabstand d zu.

Es versteht sich, daß in Figuren 4 bis 6 die Geschwindigkeitsskala für Vx,O stark gespreizt ist, d.h., es werden nur Geschwindigkeiten betrachtet, die so klein sind, daß sich der Fahrer darüber im unklaren ist, ob sich das Objekt bewegt oder nicht. In der Praxis wird der Schwellenwert Bx, zumindest in Abhängigkeit von Vf, nur bis zu einem bestimmten Maximalwert ansteigen, so daß Objekte, die der Fahrer deutlich als fahrende Objekte wahrnimmt, auch von der Klassifikationseinrichtung 24 als relevant eingestuft werden. Dieser Maximalwert kann seinerseits wieder vom Objektabstand abhängig sein, so daß sichergestellt wird, daß echte Hindernisse in jedem Fall eine rechtzeitige und angemessene Systemreaktion auslösen.

Das in Figuren 3 bis 6 dargestellte System läßt sich selbstverständlich auch mit den in Figur 2 dargestellten Systemen kombinieren, beispielsweise durch geeignete (dynamische) Modifikation des Koeffizienten fv,x und Hinzufügen eines abstandsabhängigen Terms in der Funktionsvorschrift für Bx.

**Patentansprüche**

1. Fahrerassistenzsystem für Kraftfahrzeuge, mit einem Ortungssystem (14) zur Ortung von Objekten (16) im Umfeld des Fahrzeugs (10) und einer Einrichtung (19; 26) zum Vergleich der Differenz zwischen der Relativbewegung (ux, O, uy,O) des Objekts und der Eigenbewegung (Vf) des Fahrzeugs (10) mit einem Schwellenwert (Bx, By), **dadurch gekennzeichnet, daß** diese Einrichtung (19; 26) dazu ausgebildet ist, den Schwellenwert (Bx, By) als Funktion der Standardabweichungen von Größen (hi), die die Genauigkeit der Bestimmung der Relativ- und Eigenbewegungen beeinflussen, zu variieren.

2. Fahrerassistenzsystem nach Anspruch 1, **dadurch gekennzeichnet, daß** die Größen (hi), auf deren Grundlage der Schwellenwert (Bx) variiert wird, solche Größen umfassen, die die Genauigkeit beeinflussen, mit der die Relativ- und Eigenbewegungen mit Hilfe des Ortungssystems (14) bestimmbar sind.

3. Fahrerassistenzsystem nach Anspruch 2, **dadurch gekennzeichnet, daß** die Größen (hi) mindestens eine der folgenden Größen umfassen: Standardabweichung ( ux,O) bei der Messung der Relativgeschwindigkeit (ux,O) des Objekts in Fahrtrichtung (X) des Fahrzeugs (10), Beschleunigung (af) des Fahrzeugs (10), Giergeschwindigkeit (d /dt) des Fahrzeugs (10), Eigengeschwindigkeit (Vf) des Fahrzeugs (10).

4. Fahrerassistenzsystem nach Anspruch 2 oder 3, **dadurch gekennzeichnet, daß** die Einrichtung (19) dazu ausgebildet ist, anhand der Relativbewegung des Objekts und der Eigenbewegung des Fahrzeugs (10) die Absolutgeschwindigkeit (Vx,O, Vy,O) des Objekts (16) sowohl in Fahrtrichtung (X) des Fahrzeugs (10) als auch in Querrichtung (Y) zu berechnen und jeweils mit einem Schwellenwert (Bx, By) zu vergleichen, der von den genannten Größen (hi) abhängig ist.

5. Fahrerassistenzsystem nach den Ansprüchen 3 und 4,**dadurch gekennzeichnet, daß** die Größen (hi) außerdem den gemessenen Abstand (d) des Objekts (16) sowie die Standardabweichung ( uy,O) für die Messung der Relativgeschwindigkeit in der Querrichtung (Y) umfassen.

6. Fahrerassistenzsystem nach einem der Ansprüche 3 bis 5, **dadurch gekennzeichnet, daß** die Einrichtung (19) dazu ausgebildet ist, die Giergeschwindigkeit (d /dt) auf zwei unterschiedliche Weisen zu bestimmen, nämlich einmal durch direkte Auswertung des Signals eines Gierratensensors und zum anderen anhand des Lenkeinschlags (S), und daß eine der Größen (hi) zur Berechnung des Schwellenwertes (Bx, By) das Maximum dieser beiden Giergeschwindigkeiten ist.

7. Fahrerassistenzsystem nach einen der vorstehenden Ansprüche, **dadurch gekennzeichnet, daß** der Schwellenwert (Bx, By) eine Linearkombination der Größen (hi) ist, zuzüglich eines Mindest-Schwellenwertes (Bmin,x, Bmin,y).

8. Fahrerassistenzsystem nach Anspruch 7, **dadurch gekennzeichnet, daß** der Schwellenwert Bx für die Bewegung in Fahrtrichtung (X) gegeben ist durch:

$$\mathbf{Bx = Bmin,x + f\ ,x^*\ ux,O + fa,x^*|af| + fv,x^*|Vf| + fg,x^*g}$$

wobei Bmin,x der Mindest-Schwellenwert, ux,O die Standardabweichung, af die Beschleunigung des Fahrzeugs (10), Vf die Eigengeschwindigkeit des Fahrzeugs (10) und g die Giergesschwindigkeit ist und f ,x, fa,x, fv,x und fg,x vorgegebene Koeffizienten sind.

9. Fahrerassistenzsystem nach den Ansprüchen 5 und 8, **dadurch gekennzeichnet, daß** der Schwellenwert By für die Bewegung in Querrichtung (Y) gegeben ist durch:

$$\mathbf{By = Bmin,y + f\ ,y^*\ uy,O + fd,y * d\ + fv,y^*|Vf| + fg,y^*g}$$

wobei Bmin,y der Mindest-Schwellenwert, uy,O die Standardabweichung in Querrichtung und d der Abstand des Objekts (16) ist und f ,y, fd,y, fv,y und fg,y vorgegebene Koeffizienten sind.

10. Fahrerassistenzsystem nach einem der vorstehenden Ansprüche, **dadurch gekennzeichnet, daß** die Einrichtung (19) eine Klassifikationseinrichtung (24) aufweist, zur Klassifikation der Objekte (16) in bewegte und stehende Objekte und zusätzlich zur Klassifikation in bewegbare und nicht bewegbare Objekte, wobei ein Objekt nur dann als bewegbar klassifiziert wird, wenn es in einer bestimmten Anzahl von aufeinanderfolgenden Messzyklen stets als bewegt klassifiziert wurde.

11. Fahrerassistenzsystem nach einem der vorstehenden Ansprüche, **dadurch gekennzeichnet, daß** die Größen (hi), auf deren Grundlage der Schwellenwert (Bx) variiert wird, solche Größen umfassen, die die Genauigkeit beeinflussen mit der die Relativ- und Absolutbewegungen des Objekts durch den Fahrer des Fahrzeugs (10) abschätzbar sind.

12. Fahrerassistenzsystem nach Anspruch 11, **dadurch gekennzeichnet, daß** die Einrichtung (26) eine Klassifikationseinrichtung (24) zur Klassifikation der Objekte (16) in relevante und nicht relevante Objekte aufweist.

13. Fahrerassistenzsystem nach Anspruch 11 oder 12, **dadurch gekennzeichnet, daß** der Schwellenwert (Bx) mit steigendem Objektabstand (d) zunimmt.

14. Fahrerassistenzsystem nach einem der Ansprüche 11 bis 13, **dadurch gekennzeichnet, daß** der Schwellenwert (Bx) mit steigender Eigengeschwindigkeit (Vf) des Fahrzeugs (10) zunimmt.

**Claims**

1. Driver assistance system for motor vehicles, comprising a locating system (14) for locating objects (16) in the surrounding area of the vehicle (10), and a device (19; 26) for comparing the difference between the relative movement (ux,O, uy,O) of the object and the intrinsic movement (Vf) of the vehicle (10) with the aid of a threshold value (Bx, By), **characterized in that** this device (19; 26) is designed to vary the threshold value (Bx, By) as a function of the standard deviations of variables (hi) which influence the accuracy of the determination of the relative and intrinsic movements.

2. Driver assistance system according to Claim 1, **characterized in that** the variables (hi) on the basis of which the threshold value (Bx) is varied comprise variables such as influence the accuracy with which the relative and intrinsic movements can be determined with the aid of the locating system (14).

3. Driver assistance system as claimed in Claim 2, **characterized in that** the variables (hi) comprise at least one of the following variables: standard deviation ( ux,O) in the measurement of the relative speed (ux,O) of the object in the driving direction (X) of the vehicle (10), acceleration (af) of the vehicle (10), yaw rate (d /dt) of the vehicle (10), and intrinsic speed (Vf) of the vehicle (10).

4. Driver assistance system according to Claim 2 or 3, **characterized in that** the device (19) is designed to use the relative movement of the object and the intrinsic movement of the vehicle (10) to calculate the absolute speed (Vx, O, Vy,O) of the object (16) both in the driving direction (X) of the vehicle (10) and in the transverse direction (Y), and in each case to compare it with a threshold value (Bx, By) which depends on said variables (hi).

5. Driver assistance system according to Claims 3 and 4, **characterized in that** the variables (hi) furthermore comprise the measured distance (d) of the object (16), and the standard deviation ( uy,O) for the measurement of the relative speed in the transverse direction (Y).

6. Driver assistance system according to one of Claims 3 to 5, **characterized in that** the device (19) is designed to determine the yaw rate (d /dt) in two different ways, specifically firstly by directly evaluating the signal of a yaw rate sensor, and secondly with the aid of the steering lock (S), and **in that** one of the variables (hi) for calculating the threshold value (Bx, By) is the maximum of these two yaw rates.

7. Driver assistance system according to one of the preceding claims, **characterized in that** the threshold value (Bx, By) is a linear combination of the variables (hi) with the addition of a minimum threshold value (Bmin,x, Bmin, y)

8. Driver assistance system according to Claim 7, **characterized in that** the threshold value Bx for the movement in the driving direction (X) is given by:

$$Bx = Bmin,x + f,x* ux,O + fa,x*|af| + fv,x*|Vf| + fg,x*g,$$

Bmin,x being the minimum threshold value, ux,O being the standard deviation, af being the acceleration of the vehicle (10), Vf being the intrinsic speed of the vehicle (10), and g being the yaw rate, and f,x, fa,x, fv,x and fg,x being prescribed coefficients.

9. Driver assistance system according to Claims 5 and 8, **characterized in that** the threshold value By for the movement in the transverse direction (Y) is given by:

$$By = Bmin,y + f,y* uy,O + fd,y * d + fv,y*|Vf| + fg,y*g,$$

Bmin, y being the minimum threshold value, uy,O being the standard deviation in the transverse direction, and d being the distance of the object (16), and f,y, fd,y, fv,y and fg,y being prescribed coefficients.

10. Driver assistance system according to one of the preceding claims, **characterized in that** the device (19) has a classification device (24) for classifying the objects (16) into moving and stationary objects and, in addition, for classifying them into movable and immovable objects, an object being classified as movable only when it has always been classified as moving in a specific number of consecutive measuring cycles.

11. Driver assistance system according to one of the preceding claims, **characterized in that** the variables (hi) on the basis of which the threshold value (Bx) is varied comprise variables such as influence the accuracy with which the relative and absolute movements of the object can be estimated by the driver of the vehicle (10).

12. Driver assistance system according to Claim 11, **characterized in that** the device (26) has a classification device (24) for classifying the objects (16) into relevant and irrelevant objects.

13. Driver assistance system according to Claim 11 or 12, **characterized in that** the threshold value (Bx) increases with rising object distance (d).

14. Driver assistance system according to one of Claims 11 to 13, **characterized in that** the threshold value (Bx) increases with rising intrinsic speed (Vf) of the vehicle (10).

**Revendications**

1. Système d'assistance à la conduite pour des véhicules automobiles comportant un système de localisation (14) pour localiser des objets (16) dans l'environnement du véhicule (10) ainsi qu'une installation (19 ; 26) pour comparer la différence entre le mouvement relatif (ux,O, uy,O) de l'objet et le mouvement propre (Vf) du véhicule (10) avec une valeur de seuil (Bx, By),
**caractérisé en ce que**
cette installation (19 ; 26) est réalisée pour modifier la valeur de seuil (Bx, By) comme fonction de l'écart standard des grandeurs (hi) qui influencent la précision de la détermination des mouvements relatifs et des mouvements propres.

2. Système d'assistance à la conduite selon la revendication 1,
**caractérisé en ce que**
la grandeur (hi) est modifiée sur le fondement de la valeur de seuil (Bx) comprenant des grandeurs qui influencent la précision à laquelle on détermine les mouvements relatifs et les mouvements propres avec le système de localisation (14).

**3.** Système d'assistance à la conduite selon la revendication 2,
**caractérisé en ce que**
les grandeurs (hi) comprennent au moins l'une des grandeurs suivantes : écart standard (ux,O) pour la mesure de la vitesse relative (ux,O) de l'objet dans la direction de déplacement (X) du véhicule (10), accélération (af) du véhicule (10), vitesse de lacet (d/dt) du véhicule (10), vitesse propre (Vf) du véhicule (10).

**4.** Système d'assistance à la conduite selon la revendication 2 ou 3,
**caractérisé en ce que**
l'installation (19) est réalisée pour qu'à l'aide du mouvement relatif de l'objet et du mouvement propre du véhicule (10), on calcule la vitesse absolue (Vx,O, Vy,O) de l'objet (16) à la fois dans la direction de déplacement (X) du véhicule (10) et aussi dans la direction transversale (Y) et on compare respectivement à une valeur de seuil (Bx, By) dépendant des grandeurs (hi) indiquées.

**5.** Système d'assistance à la conduite selon les revendications 3 et 4,
**caractérisé en ce que**
les grandeurs (hi) comprennent en outre la distance mesurée (d) de l'objet (16) ainsi que l'écart standard (uy,O) pour la mesure de la vitesse relative dans la direction transversale (Y).

**6.** Système d'assistance à la conduite selon l'une des revendications 3 à 5,
**caractérisé en ce que**
l'installation (19) est réalisée pour déterminer la vitesse de lacet (d/dt) de deux manières différentes, à savoir une première fois par l'exploitation directe du signal d'un capteur de vitesse de lacet et d'autre part à l'aide du braquage (S) et **en ce que** l'une des grandeurs (hi) pour le calcul de la valeur de seuil (Bx, By) est le maximum de ces deux vitesses de lacet.

**7.** Système d'assistance à la conduite selon l'une des revendications précédentes,
**caractérisé en ce que**
la valeur de seuil (Bx, By) est une combinaison linéaire des grandeurs (hi) en plus d'une valeur de seuil minimale (Bmin,x, Bmin,y).

**8.** Système d'assistance à la conduite selon la revendications 7,
**caractérisé en ce que**
la valeur de seuil (Bx) du déplacement dans la direction (X) est donnée par la forme suivante :

$$Bx = Bmin,x + f\ ,x^*\ ux,O + fa,x^*|af| + fv,x^*|Vf| + fg,x^*g$$

dans cette formule Bmin,x représente la valeur de seuil minimale, ux, O représente l'écart standard, af représente l'accélération du véhicule (10), Vf représente la vitesse propre du véhicule (10), g représente la vitesse de lacet et f ,x, fa,x, fv,x et fg,x sont des coefficients prédéterminés.

**9.** Système d'assistance à la conduite selon les revendications 5 et 8,
**caractérisé en ce que**
la valeur de seuil By pour le mouvement dans la direction transversale (Y) est donnée par la formule suivante :

$$By = Bmin,y + f\ ,y^*\ uy,O + fd,y * d + fv,y^*|Vf| + fg,y^*g$$

et dans cette formule Bmin,y représente la valeur de seuil minimale, uy,O représente l'écart standard dans la direction transversale et d représente l'écart de l'objet (16), f ,y, fd,y, fv,y et fg,y étant des coefficients prédéfinis.

**10.** Système d'assistance à la conduite selon l'une des revendications précédentes,
**caractérisé en ce que**
l'installation (19) comporte une installation de classification (24) pour classifier les objets (16) en objets mobiles et objets immobiles et en plus de la classification d'objets mobiles et en objets immobiles, un objet étant seulement classifié en objet mobile s'il a été classifié toujours comme objet mobile au cours d'un nombre déterminé de cycles de mesure successifs.

11. Système d'assistance à la conduite selon l'une des revendications précédentes,
    **caractérisé en ce que**
    les grandeurs (hi) servant de fondement à la modification de la valeur de seuil (Bx) sont des grandeurs qui influencent la précision avec laquelle sont évalués les mouvements relatifs et les mouvements absolus de l'objet par le conducteur du véhicule (10).

12. Système d'assistance à la conduite selon la revendication 11,
    **caractérisé en ce que**
    l'installation (26) comporte une installation de classification (24) pour classifier les objets (16) en objets déterminants et en objets non déterminants.

13. Système d'assistance à la conduite selon la revendication 11 ou 12,
    **caractérisé en ce que**
    la valeur de seuil (Bx) augmente avec l'augmentation de la distance de l'objet (d).

14. Système d'assistance à la conduite selon l'une des revendications 11 à 13,
    **caractérisé en ce que**
    la valeur de seuil (Bx) augmente avec l'augmentation de la vitesse propre (Vf) du véhicule (10).

## Fig. 1

## Fig. 2

## Fig. 3

## Fig. 4          Fig. 5          Fig. 6

**IN DER BESCHREIBUNG AUFGEFÜHRTE DOKUMENTE**

**In der Beschreibung aufgeführte Patentdokumente**

- US 5929803 A